# NEUE EUROPÄISCHE PATENTSCHRIFT

(11) **EP 3 345 707 B2**
(45) Veröffentlichungstag und Bekanntmachung des Hinweises auf die Entscheidung über den Einspruch: **21.01.2026**
(45) Hinweis auf die Patenterteilung: 19.10.2022
(21) Anmeldenummer: 17206404.0
(22) Anmeldetag: 11.12.2017
(51) Int. Cl.: B23F 23/12, B23Q 17/22, B23Q 17/24

(54) **VERFAHREN ZUM AUTOMATISCHEN BESTIMMEN DER GEOMETRISCHEN ABMESSUNGEN EINES WERKZEUGES IN EINER VERZAHNMASCHINE**
METHOD FOR AUTOMATICALLY DETERMINING GEOMETRICAL DIMENSIONS OF A TOOL IN A GEAR CUTTING MACHINE
PROCÉDÉ DE DÉTERMINATION DE MANIÈRE AUTOMATIQUE DES DIMENSIONS GÉOMÉTRIQUES D'UN OUTIL DANS UNE MACHINE À TAILLER LES ENGRENAGES

(30) Priorität: 05.01.2017 DE 102017000072
(43) Veröffentlichungstag der Anmeldung: 11.07.2018
(73) Patentinhaber: Liebherr-Verzahntechnik GmbH, 87437 Kempten (DE)
(72) Erfinder: Stach, Stefan, 87452 Altusried (DE); Buchenberg, Andreas, 87657 Görisried (DE); Schöllhorn, Martin, 87388 Betzigau (DE); Schollenbruch, Uli, 87437 Kempten (DE)
(74) Vertreter: Lorenz Seidler Gossel Part. mbB

(56) Entgegenhaltungen:
- EP-A2- 2 093 007
- DE-A1- 102014 007 646
- DE-A1- 19 910 747
- DE-A1- 3 827 752
- DE-C1- 19 901 338
- JP-A- 2016 078 186
- H. Schriefer et al., "Kontinuierliches Wälzschleifen von Verzahnungen", Eigenverlag Reishauer AG, Wallisellen, , Juni 2008
- Auszug aus der Bedienungsanleitung zur Verzahnungsschleifmaschine RZ 160 mit der Seriennummer 78313, ausgeliefert am 26.07.2013 an die Stelter Zahnradfabrik GmbH,27211 Bassum (DE)
- BYRNE, G. ET AL: "Tool Condition Monitoring (TCM) - The Status of Research and Industrial Application", CIRP ANNALS., ELSEVIER BV, NL, CH, FR, vol. 44, no. 2, 1 January 1995 (1995-01-01), NL, CH, FR , pages 541 - 567, XP022134031, ISSN: 0007-8506, DOI: 10.1016/S0007-8506(07)60503-4
- GOSEBRUCH H.: "SCHLEIFSCHEIBEN-GEOMETRIE UND -TOPOGRAPHIE IN ECHTZEIT.", VDI Z, SPRINGER VDI VERLAG, DE, vol. 131., no. 01., 1 January 1989 (1989-01-01), DE , pages 68 - 71., XP000025505, ISSN: 0042-1766
- WERNER FRANK: "Hochgeschwindigkeits- triangulation zur Verschleißdiagnose an Schleifwerkzeugen", FORTSCHRITT-BERICHTE VDI REIHE 8: MESS-, STEUERUNGS UND REGELUNGSTECHNIK, VDI-VERLAG, vol. Reihe 8, no. 429, 1 January 1994 (1994-01-01), pages 1 - 92, XP093129180

## Beschreibung

Die vorliegende Erfindung betrifft ein Verfahren zur automatischen Bestimmung der geometrischen Abmessungen eines Werkzeuges mit einem schneckengangförmigen Bearbeitungsbereich, insbesondere einer Schleifschnecke, in einer Verzahnmaschine, sowie ein Verfahren zum automatisierten Einmitten des Werkzeuges relativ zu einem verzahnten Werkstück. Des Weiteren betrifft die Erfindung eine Verzahnmaschine zum Durchführen eines erfindungsgemäßen Verfahrens.

Aus dem Stand der Technik sind Verfahren und Vorrichtungen bekannt, bei welchen Schleifschnecken, die bei hohen bis sehr hohen Drehzahlen eingesetzt werden, mit einem bekannten und bewährten Profilierverfahren bei niedrigen Drehzahlen abgerichtet werden können und trotzdem bei Arbeitsdrehzahlen, d. h. im Spannungszustand unter der Fliehkraft, die geforderte exakte Profilgeometrie aufweisen.

Es ist bekannt, dass das Vermessen des Schleifschneckenprofils beispielsweise direkt an der Schleifschnecke mittels eines berührungslosen Messsystems - wie laseroptischer Abstandsmessung - oder indirekt über das Schleifen und Vermessen eines Musterwerkstückes erfolgen kann. Hierbei ist es ferner bekannt, an einer profilierten Schleifschnecke das infolge der Wirkung der Fliehkräfte leicht deformierte Schleifschneckenprofil bei Arbeitsdrehzahl zu vermessen.

Beim Rüsten einer Verzahnmaschine zur Bearbeitung vorverzahnter Werkstücke ist ein mehrstufiger Rüstprozess notwendig. Zunächst müssen die geometrischen Abmessungen des Werkzeuges außerhalb der Verzahnmaschine manuell ermittelt bzw. können je nach den Abmessungen auch aus Werkzeugdatenblättern entnommen werden. Anschließend müssen diese Daten in der Maschinensteuerung gespeichert werden. Manche dieser geometrischen Daten ändern sich bei abrichtbaren Werkzeugen im Laufe der Zeit - z.B. beim Abrichten -, wie beispielsweise der Schneckendurchmesser, bzw. müssen bei verändertem Schneckendurchmesser zusätzlich modifiziert werden, um Profilfehler zu vermeiden, wie dies zum Beispiel auf die Steigungshöhe oder den Eingriffswinkel zutrifft. Diese Daten müssen über der Schleifschneckennutzungszeit mitprotokolliert werden, damit sie beim erneuten Einwechseln des Werkzeugs wieder verfügbar sind.

In einem weiteren Schritt im Rüstprozess muss die Lage der Werkzeuggänge relativ zur Drehposition der Werkzeugachse in der Steuerung hinterlegt werden. Diese Information sowie die Position der Werkstückzahnlücken relativ zur Drehposition der Werkstückachse sind erforderlich um einen fehlerfreien, wälzgekoppelten Zahnradbearbeitungsprozess durchführen zu können. Diese weiteren Prozessschritte werden häufig als Einmitten bezeichnet.

Im anschließenden Bearbeitungsprozess wird dann nur noch die Lage der Werkstückzahnlücken von jedem zu bearbeitenden Werkstück mittels eines Einfädelsensors ermittelt und die dazu passende Drehposition der Werkstückachse gespeichert. Im Bearbeitungsprozess wird dann die Drehposition der Werkstückachse mit der Drehposition der Werkzeugachse synchronisiert, so dass die Werkzeuggänge kollisionsfrei in die Zahnlücken eintauchen können und das Werkstück wälzgekoppelt bearbeitet werden kann.

Bislang werden trotz der bereits hoch automatisierten Verzahnungsprozesse Teile dieses Gesamtprozesses in nachteiliger Weise händisch oder nur halbautomatisch durchgeführt. So muss bisher nach der im Wesentlichen manuellen Eingabe der geometrischen Parameter des Werkzeuges der Maschinenbediener beim Erst-Einmitten das Werkzeug relativ zur Zahnlücke eines Werkstückes positionieren. Dazu wird das Werkzeug um seine Rotationsachse händisch so lange gedreht, bis die Zähne des Werkzeuges kollisionsfrei in die Zahnlücken eintauchen können. Anschließend wird das Werkzeug zugestellt und durch vershiften oder verdrehen des Werkzeuges jeweils Kontakt mit der linken und rechten Zahnflanke der Werkzeuges hergestellt sowie der Messwert dafür aufgezeichnet. Aus diesen Kontaktmaßen lässt sich die Zahnmittenposition des Werkzeuges relativ zur Zahnlücke berechnen und daraus die Drehposition des Werkzeuges bestimmen, an der dieses kollisionsfrei in eine bekannte Zahnlücke eintauchen kann.

All diese manuellen Arbeitsschritte bringen Nachteile, wie erhöhte Einrichtzeiten sowie durch die manuelle Bedienung möglicherweise auftretende Fehleinstellungen der Verzahnmaschine mit sich.

Bisher ist nur die Vermessung der Schleifschneckenprofilform bei der Arbeitsdrehzahl der Schleifschnecke bekannt. Nicht bekannt ist jedoch, ein berührungsloses Messsystem zum Bestimmen verschiedener geometrischer Parameter eines Werkzeuges mit einem schneckengangförmigen Bearbeitungsbereich einzusetzen. Durch die automatisierte Bestimmung der verschiedenen geometrischen Abmessungen eines Werkzeugs, welche die Verzahnmaschine zur Werkstückbearbeitung benötigt, können Werkzeugparameter vollautomatisch bestimmt und so Fehleingaben verhindert werden.

Vorteilhaft kann es sich bei dem Werkzeug um eine Schleifschnecke handeln. Es können aber auch andere ähnlich aufgebaute Werkzeuge dem Verfahren unterzogen werden, wie z.B. Schälwälzfräser, wenn dabei die Besonderheit der durch die Spanuten unterbrochenen Schneckengänge bei der Parameterermittlung berücksichtigt werden.

Aus der JP 2016078186 A ist ein Verfahren zum automatischen Bestimmen der geometrischen Abmessungen eines Werkzeuges mit den Merkmlen des Oberbegriffs des Anspruchs 1 bekannt.

Die Aufgabe der Erfindung besteht daher darin, ein vollautomatisches Ermitteln von prozessrelevanten geometrischen Parametern der Schleifschnecke durchzuführen, eine automatisierte Bestimmung der Lage der Schneckengangposition relativ zur Drehposition der Schleifschnecke um ihre Achse zu ermitteln, sowie ein automatisches Einmitten der Schleifschnecke in die Verzahnung eines Werkstückes zu ermöglichen.

Diese Aufgabe wird erfindungsgemäß durch ein Verfahren mit den Merkmalen des Anspruchs 1 gelöst. Demnach wird ein Verfahren zum automatischen Bestimmen wenigstens eines Parameters einer Schleifschnecke einer Verzahnmaschine vorgeschlagen, welches sich dadurch auszeichnet, dass mittels wenigstens eines Sensors automatisch wenigstens ein Parameter der Schleifschnecke erfasst und/oder bestimmt werden kann.

Unter "Parameter" können dabei verschiedene geometrische Abmessungen, wie der Schneckendurchmesser, die Schneckenbreite, der Steigungswinkel und die - richtung, aber auch die Gangzahl der Schleifschnecke, verstanden werden. Ein "Paramete"r im Sinne der Erfindung kann aber auch andere Aspekte enthalten.

Mit dem "Einmitten der Schleifschnecke" kann gemeint sein, dass ein sogenannter Wälzeingriff zwischen der Schleifschnecke und einem verzahnten Werkstück realisiert wird. Eine exakte Positionierung und Ausrichtung des Schneckengangs oder bei mehrgänggigen Schleifschnecken der Schneckengänge der Schleifschnecke und relativ zu den Zähne des verzahnten Werkstückes sind daher unabdingbar.

Grundvoraussetzung für das Verfahren ist zunächst ein Kalibriervorgang, bei dem die exakte Lage des Sensors in Bezug zur Schleifschnecke und seine Positionierung innerhalb der Verzahnmaschine ermittelt und gespeichert wird. Dies insbesondere deswegen, da der Sensor nicht zwangsläufig mittig zu beispielsweise der Schleifschnecke oder sonst in einer bekannten bzw. definierten Position angeordnet sein kann und mithin das Verfahren bei unbekannter Position des Sensors keine verwertbaren Ergebnisse liefern würde.

Erfindungsgemäß können die Parameter somit automatisiert schneller und genauer bestimmt werden. Ebenfalls kann dieses Verfahren eine kostengünstige und schmutzresistente Möglichkeit bieten, die Parameter der Schleifschnecke zu bestimmen. Das bietet gegenüber dem eingangs geschilderten Stand der Technik den Vorteil, dass Fehleinstellungen durch den Maschinenbediener reduziert werden können und ebenfalls ein schnellerer Werkzeugwechsel realisiert werden kann. Weiterhin ist es vorteilhaft, dass auf Temperaturveränderungen bzw. auf temperaturbedingte Änderungen der Verzahnmaschinengeometrie reagiert werden kann und Gegenständerverlagerungen etc. mittels des Sensors erfasst und ggf. ausgeglichen werden können.

Erfindungsgemäß wird mittels einer rechnerischen Verarbeitung der erfassten und/oder bestimmten Werte die Teilung, das Modul, der Durchmesser, die Steigung und/oder die Lage der Schnecke in der Werkzeugaufnahme und deren Aussenabmessungen in V-Richtung bestimmt werden.

Vorteilhafte Ausbildungen der Erfindung sind Gegenstand der Unteransprüche.

Bei dem erfindungsgemäßen Verfahren kann in an sich bekannter Weise bei Bedarf ein Kalibrierungsvorgang zum Bestimmen der Lage des Sensors in Bezug zu der Schleifschnecke und/oder zu der Positionierung innerhalb der Verzahnmaschine durchgeführt werden. Mit dem Kalibrierungsvorgang ist hierbei ein Schritt gemeint, welcher jedes Mal bei der Durchführung des erfindungsgemäßen Verfahrens vor den weiteren Schritten oder vor dem weiteren Schritt durchgeführt werden könnte oder welcher alternativ bei erstmaliger Durchführung des Verfahrens vor den weiteren Schritten ausgeführt wird und in folgenden Anwendungen des Verfahrens entfallen kann. Bei dem Kalibrierungsvorgang wird unter anderem die Lage des Sensors hinsichtlich seiner Positionierung innerhalb der Verzahnmaschine bestimmt. Hierbei muss der Sensor nicht im wörtlichen Sinne innerhalb der Verzahnmaschine angeordnet sein, sondern kann vielmehr lediglich Teil des Gefüges der Verzahnmaschine sein und so beispielsweise an einer der Außenseiten der Verzahnmaschine angeordnet sein.

In einer weiteren bevorzugten Ausbildung wird die Schleifschnecke zur Bestimmung der Gangzahl auf einen vordefinierten Referenzpunkt, vorzugsweise die Ausrichtung der A-Achse auf 0° vorgenommen. Daraufhin werden anschließend mit dem Sensor mehrere Umdrehungen, insbesondere drei Umdrehungen, der Schleifschnecke um die B-Achse detektiert.

In einer weiteren bevorzugten Ausbildung der Erfindung kann es vorgesehen sein, dass zur Bestimmung der Steigungsrichtung wenigstens je eine Messung mittels des Sensors oberhalb und unterhalb der Achsmitte der Schleifschnecke durchgeführt wird und/oder die Schleifschnecke gedreht wird und durch gegenseitiges Verschieben des Sensors und/oder der Schleifschnecke in V-Richtung die Steigungsrichtung ermittelt wird. Bei der erstgenannten Variante wird eine Messung beispielsweise oberhalb und unterhalb der Mitte und insbesondere in einer axialen Richtung von der Mitte der Schleifschnecke beabstandet durchgeführt, wobei es durch die Ermittlung dieser zwei Punkte auf der Schleifschnecke anschließend rechnerisch möglich ist, die Steigungsrichtung der Schleifschnecke zu errechnen und somit festzulegen. Bei der zweitgenannten Variante wird die Ermittlung der Steigungsrichtung so durchgeführt, dass mittels eines Drehens der Schleifschnecke und eines gleichzeitig stattfindenden relativen Verschiebens in eine bestimmte V-Richtung die Steigungsrichtung ermittelt wird. Bei zuvor richtig angenommener Steigungsrichtung bleibt das erhaltene Signal konstant, da sich der Sensor synchron mit dem Schneckengang bewegt. Somit kann die Annahme der Richtung bestätigt werden. Sollte das Signal abfallen, weil sich der Sensor relativ zum Schneckengang bewegt, kann daraus geschlossen werden, dass die Steigungsrichtung falsch angenommen wurde und die Bewegungsrichtung des Sensors muss dementsprechend angepasst werden. Entsprechend lässt sich die Steigungsrichtung ebenfalls mittels des Sensors bestimmen.

Gemäß einer weiteren bevorzugten Ausführung kann zum Einmitten der Schleifschnecke die Schleifschnecke entlang deren Längs-·bzw. V-Achsen-Richtung oder V-Richtung verfahren werden, wobei mittels des Sensors die Position der Zähne entlang der V-Achsen-Richtung bestimmt und daraus die Mittenposition zwischen zwei Zähnen berechnet bzw. bestimmt wird.

Gemäß der vorliegenden Erfindung ist der Sensor ein optischer Sensor. Er kann analog oder digital arbeiten. Denkbar sind demnach die Kombination der unterschiedlichen Prinzipien und alternativ oder zusätzlich eine Ausführung der Erfindung mit mehr als einem Sensor, wobei die Sensoren dabei auch unterschiedlich ausgebildet sein können. Das bietet den Vorteil, dass je nach Material der zu erfassenden Schleifschnecke ein jeweiliger Sensor Anwendung finden kann und dementsprechend eine variable Ausgestaltung des Verfahrens möglich ist.

In einer bevorzugten Ausführung ist eine Bestimmung unterschiedlicher Parameter zum automatischen Einmitten asymmetrischer Profile mittels des Sensors möglich. Das bietet den Vorteil, dass das Einmitten einer Schleifschnecke mit asymmetrischen Schneckenprofil ebenfalls automatisch und zuverlässig durchgeführt werden kann.

Die Erfindung ist ferner auf eine Verzahnmaschine mit einer Maschinensteuerung zum Durchführen eines des vorgenannten Verfahren gerichtet, wobei ein Sensor zum Abtasten einer Schleifschnecke vorgesehen ist.

Weitere Merkmale, Einzelheiten und Vorteile der Erfindung sind anhand der in den Figuren beispielhaft gezeigten Ausführung erläutert. Dabei zeigen:
- Fig. 1:: eine Schleifvorrichtung nach dem Stand der Technik;
- Fig. 2:: eine schematische Darstellung einer geneigten Schleifschnecke und eines erfindungsgemäß vorgesehenen Sensors und
- Fig. 3:: eine schematische Darstellung einer Schleifschnecke mit Schleifdorn, Gegenständer und optischem Sensor.

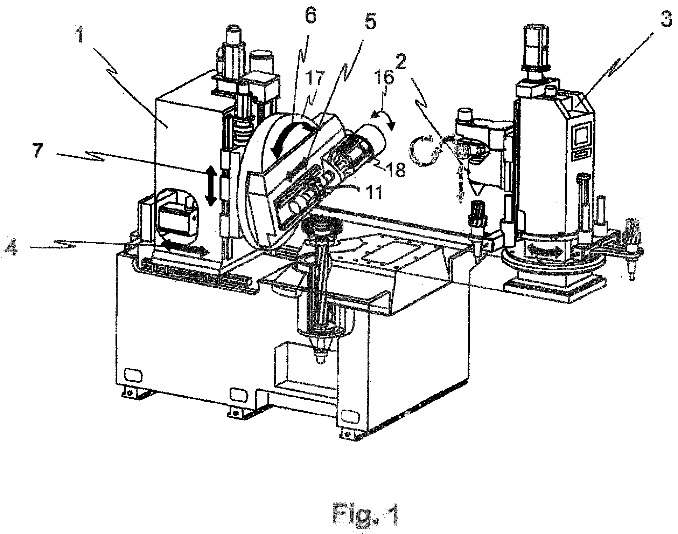

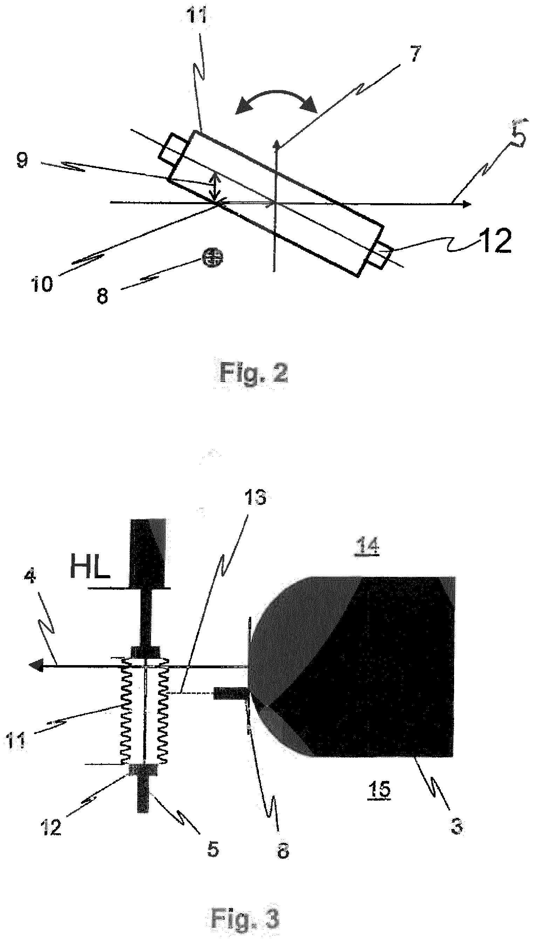

Figur 1 zeigt eine Schleifvorrichtung gemäß dem Stand der Technik. In Figur 1 sind insbesondere die Achsen einer Schleifvorrichtung vollständigkeitshalber und verständnishalber aufzuzeigen. Im linken Bereich der Verzahnmaschine ist ein Maschinenständer 1 gezeigt und dazu horizontal beabstandet ein Gegenständer 3. Entlang des Maschinenständers 1 kann ein Bearbeitungskopf 17 mit einer Shiftachse 5 (V-Achse) und einem Antriebsmotor 18 zur Aufnahme eines Schleifwerkzeuges 11 in Richtung einer Z-Achse 7 vertikal verfahren werden. Im Bereich des Gegenständers 3 der an sich bekannten Verzahnmaschine kann ein Einbauort 2 des erfindungsgemäß vorgesehenen Sensors 8 liegen. Zur Beschreibung der Erfindung wird sowohl auf die Figur 1 als auch auf die folgenden Figuren 2 und 3 Bezug genommen, welche Details der Erfindung zeigen, die in der Darstellung der gattungsgemäßen Vorrichtung nach Figur 1 nicht gezeigt sind.

Bei der Durchführung des Kalibriervorgangs ist darauf zu achten, dass die A-Achse 6 der Schleifschnecke 11 auf 0° ausgerichtet ist. Hierzu kann die Schleifschnecke 11 beispielsweise horizontal angeordnet bzw. positioniert sein, wozu sie entsprechend um die A-Achse 6 geschwenkt werden kann. Dies bietet den Vorteil, dass ein festgelegter Referenzwert vorhanden ist. Die Position des Sensors 8 und dessen Schaltpunkt können danach automatisch ermittelt werden. Die Schleifschnecke 11 wird in Z-Richtung verschoben bis der Sensor 8 den oberen Teil des Schleifdorns 12 erfasst. Danach wird sie nochmals verschoben bis der Sensor 8 den unteren Teil des Schleifdorns 12 erfasst. Aus diesen beiden gespeicherten Werten lässt sich durch Mittelwertbildung die Sensorhöhe relativ zur Schneckenachse berechnen. Der Achsabstand des Sensors 8 zur Schleifschnecke lässt sich ähnlich ermitteln, indem der Schleifdorn 12 so lange vertikal verfahren wird, bis der größte Durchmesser am Schleifdorn 12 erreicht ist. Nachdem der Durchmesser des Schleifdorns 12 sich bei der Bearbeitung nicht verändert wird, kann mit Hilfe dieses Durchmessers und dem Sensorsignal der Sensorabstand zur Werkzeugmittelachse errechnet werden.

Wie weit der Sensor 8 aus der Maschinenmitte (Werkstückmitte) heraus in V-Richtung verschoben ist, lässt sich wie folgt ermitteln: Die Schleifschnecke 11 wird ausgehend von einer bestimmten Startposition in V-Richtung verschoben bis der Sensor 8 den Anfang (das Ende) der Schleifschnecke 11 auf der Hauptlagerseite (HL) erfasst. Das Abstandmaß zwischen dem Hauptlager und der Schleifschnecke ist über den konstruktiven Aufbau des Schleifdorns bekannt. Aus diesem V-Wert lässt sich berechnen, wie weit der Sensor 8 aus der Maschinenmitte heraus verschoben ist. Um den Schaltpunkt des Sensors 8 zu ermitteln, wird die Schleifschneckenmitte 11 auf die Sensorhöhe verfahren. Die Schleifschnecke 11 wird in Richtung der X-Achse 4 vom Sensor 8 entfernt und anschließend wieder angenähert bis der Sensor 8 den Schleifdorn 12 erfasst. Daraus kann berechnet werden, auf welchen Wert die X-Achse 4 eingestellt werden muss, damit der Schaltpunkt des Sensors 8 zwischen dem Zahnfuß und Zahnkopf der Zähne der Schleifschnecke 11 liegt.

Zudem wird zur Bestimmung der Länge der Schleifschnecke 11 diese entlang der V-Richtung vom Hauptlager aus vershiftet, wobei zuerst der Schneckenanfang auf der Hauptlagerseite durch das Schaltsignal des Sensors detektiert wird. In dem Moment wo das Schaltsignal des Sensors das Ende der Schnecke anzeigt, kann aus der Wegdifferenz die Schneckenbreite errechnet werden.

Das erfindungsgemäße Verfahren ermöglicht ebenfalls eine Bestimmung der Gangzahl der Schleifschnecke 11. Um die Gangzahl bestimmen zu können, muss auch hier die A-Achse 6 auf 0° ausgerichtet werden, wobei mit 0° eine horizontale Ausrichtung der Schleifschnecke 11 gemeint sein kann. Der Sensor wird dabei auf die Schneckenmitte und den passenden Schaltabstand zur Detektion der Schneckengänge ausgerichtet.

Der optische Sensor 8 detektiert vorzugsweise die Änderung des Schaltsignales bei drei Umdrehungen der Schleifschnecke 11 um die B-Achse 16. Bedingt durch die Schneckensteigung und die Drehung der Schleifschnecke bewegen sich die Schneckengänge in V-Richtung und erzeugen dabei eine bestimmte Anzahl an Schaltsignalen. Da die jeweiligen Zähne jeweils positive und negative Flanken aufweisen, lässt sich anhand der Schaltsignale die jeweilige Gangzahl der Schleifschnecke 11 bestimmen. Da je Zahn zwei Signale erzeugt werden, kann mit der Anzahl der erhaltenen Schaltsignale die Schneckengangzahl ermittelt werden. Bei mehrgängigen Schleifschnecken vervielfacht sich die Anzahl der Schaltsignale dementsprechend. Beim Drehen der Schleifschnecke 11 wird bei einem Anstieg der Zahnflanke von einer positiven und beim Abfallen einer Zahnflanke von einer negativen Flanke gesprochen.

So können beispielsweise bei einer 3-gängigen Schleifschnecke 11 insgesamt 18 Signale erzielt bzw. gemessen werden. Diese lassen sich dadurch herleiten, dass bei drei Umdrehungen der Schleifschnecke 11 neun Zähne berücksichtig werden und auf Basis der jeweils zwei Signale pro Zahn auf die Gesamtanzahl von 18 Signalen bei einer 3-gängigen Schleifschnecke geschlossen werden kann. Ebenso verhält sich die Vorgehensweise bei einer 2-gängigen Schleifschnecke 11, bei welcher insgesamt 12 Signale gemessen werden können und bei einer 1-gängigen Schleifschnecke 11, bei welcher insgesamt 6 Signale gemessen werden können.

Der Einmittvorgang wird immer dann durchgeführt, wenn der Maschine bzw. einer entsprechenden Steuerung/Regelung der Maschine die Lage der Schneckengänge zur Drehposition der Schleifschnecke 11 nicht bekannt ist. Dies ist beispielsweise der Fall, wenn die Schleifschnecke 11 getauscht wurde.

Eine exakte Positionierung der Schleifschnecke 11 zum Werkstück ist im Schleifprozess unabdingbar. Um den sog. Wälzeingriff bei einem Werkzeugwechsel wiederherzustellen, wird bislang händisch oder halbautomatisch das Werkzeug um dessen Rotationsachse so lange gedreht, bis die Zähne der Schleifschnecke 11 in den Zahnlücken des Zahnrades stehen. Das erfindungsgemäße Verfahren bietet nun die Möglichkeit, mittels des optischen Sensors 8, durch Verfahren entlang der V-Achse 5 die Schleifschnecke 11 entlang ihrer Längsachse zu vermessen und somit mittels der Maschinensteuerung die Lage der Zähne entlang der V-Achse 5 zu berechnen und so auf den händischen oder halbautomatischen Einmittprozess verzichten zu können.

Damit kann die Schleifschnecke 11 in das Werkstück bzw. relativ zum Werkstück automatisch eingemittet werden.

Weitere Parameter wie beispielsweise die Teilung, der Modul, die Steigung, Durchmesser der Schleifschnecke 11 etc. können durch die weitere ermittelten Werte rechnerisch bestimmt werden. So wird beispielsweise die Teilung als Weg zwischen zwei Schaltsignalen einer ansteigenden oder abfallenden Schneckengangflanke in Verbindung mit der Schneckengangzahl errechnet. Das Modul ergibt sich somit aus der ermittelten Teilung geteilt durch π. Ebenfalls liegt der Ermittlung der Steigung eine Formel zu Grunde, gemäß welcher das Modul mit dem Gang multipliziert wird.

Dabei können die Sensoren analog oder digital sein. Dies muss bei der Auswertung der Messsignale entsprechend berücksichtigt werden.

Es ist denkbar das erfindungsgemäße Verfahren ebenfalls bei asymmetrischen Profilen mittels eines analogen optischen Sensors 8 zu realisieren. Dabei gilt ist bei der Auswertung der Sensorsignale die Annäherungsrichtung der Zähne in Richtung auf den Sensor hin zu berücksichtigen und ggf. mehr Signalpunkte in die Berechnung einzubeziehen.

Neben dem Einsatz des erfindungsgemäßen Verfahrens in einer Verzahnungsschleifmaschine, kann das Verfahren auch bei weiteren Schneckenförmigen Werkzeugen eingesetzt werden beispielsweise beim Schälwälzfräsen. Allerdings muss dabei die Lage der Spannuten des Wälzfräsers und deren Einfluss bei der Signalauswertung mit berücksichtigt werden.

Figur 2 zeigt eine schematische Darstellung der geneigten Schleifschnecke 11 mit dem optischen Sensor 8. Das Bild zeigt auf, dass der Sensor in diesem Fall nicht über der Maschinenmitte angebaut ist, wodurch eine mathematische Korrekturrechnung bei der Berechnung als Z-Korrektur 9 sowie V-Verschiebung 10 notwendig ist. Die Berücksichtigung dieser Korrekturen ist vorzugsweise bei der Messung der Gangzahl und der Zähnezahl und beim Einmitten durchgeführt worden.

Figur 3 zeigt eine schematische Darstellung einer Schleifschnecke 11 mit Schleifdorn 12 und einem Gegenständer 3 mit angeordnetem optischen Sensor 8. Es ist zu erkennen, wie die erfindungsgemäße Anordnung des optischen Sensors 8 zur Schleifschnecke 11 realisiert werden soll. Hierbei kann insbesondere entlang der X-Achse 4 ein Laserstrahl 13 von dem Sensor emittiert werden. Der Sensor 8 kann zwischen einer Bedienseite 15 und einer Gegenbedienseite 14 der Verzahnmaschine bzw. des Gegenständers 3 angeordnet sein.

### Bezugszeichenliste

1 Maschinenständer
2 Einbauort des optischen Sensors
3 Gegenständer
4 X-Achse
5 V-Achse
6 A-Achse
7 Z-Achse
8 Optischer Sensor
9 Z-Korrektur
10 Y-Verschiebung
11 Schleifschnecke
12 Schleifdorn
13 Laserstrahl
14 Gegenbedienseite
15 Bedienseite
16 B-Achse
17 Bearbeitungskopf
18 Antriebsmotor

## Patentansprüche

1. Verfahren zum automatischen Bestimmen der geometrischen Abmessungen eines Werkzeuges mit einem schneckengangförmigen Bearbeitungsbereich, insbesondere einer Schleifschnecke, in einer Verzahnmaschine, wobei mittels wenigstens eines Sensors (8) automatisch wenigstens ein Parameter des Werkzeuges erfasst und/oder bestimmt wird, wobei der Sensor (8) als ein optischer Sensor (8) ausgebildet ist,
und wobei die Position des Werkzeuges innerhalb der Maschine sowie geometrische Hauptabmessungen, wie Werkzeuglänge, Werkzeugdurchmesser und/oder die Gangzahl des Werkzeuges und/oder die Steigungsrichtung des Werkzeuges, bestimmt werden und wobei mittels einer rechnerischen Verarbeitung der erfassten und/oder bestimmten Werte die Teilung, der Modul, der Durchmesser, die Schneckenbreite, die Schneckengangsteigung und/oder die V-Position des Werkzeuges, insbesondere der Schleifschnecke (11), bestimmt wird.

2. Verfahren nach Anspruch 1, **dadurch gekennzeichnet, dass** ein Kalibrierungsvorgang zum Bestimmen der Lage des Sensors (8) in Bezug zum Werkzeug, inbesondere zur Schleifschnecke (11), und/oder zu der Positionierung innerhalb der Verzahnmaschine durchgeführt wird.

3. Verfahren nach Anspruch 1, **dadurch gekennzeichnet, dass** zur Bestimmung der Gangzahl eine Ausrichtung des Werkzeuges auf einen vordefinierten Referenzpunkt, vorzugsweise die Ausrichtung der A-Achse auf 0°, vorgenommen wird, sowie anschließend der Sensor mehrere Umdrehungen, insbesondere drei Umdrehungen, des Werkzeuges, insbesondere der Schleifschnecke, um die B-Achse detektiert.

4. Verfahren nach Anspruch 1, **dadurch gekennzeichnet, dass** zur Bestimmung der Steigungsrichtung wenigstens je eine Messung mittels des Sensors oberhalb und unterhalb der Mittelachse des Werkzeuges, insbesondere der Schleifschnecke (11), durchgeführt wird und/oder das Werkzeug gedreht wird und durch gegenseitiges Verschieben des Sensors (8) und/oder des Werkzeugs in V-Richtung die Steigungsrichtung bestimmt wird.

5. Verfahren nach einem der vorhergehenden Ansprüche, **dadurch gekennzeichnet, dass** zum Einmitten des Werkzeuges, insbesondere der Schleifschnecke (11), das Werkzeug entlang deren Längs- bzw. V-Achsen-Richtung oder V-Richtung verfahren wird, wobei mittels des Sensors (8) die Position der Zähne entlang der V- Achsen-Richtung bestimmt wird.

6. Verfahren nach einem der vorhergehenden Ansprüche, wobei der Sensor (8) ein analoger und/oder digitaler Sensor (8) ist.

7. Verfahren nach einem der vorhergehenden Ansprüche, **dadurch gekennzeichnet, dass** eine Bestimmung unterschiedlicher Parameter zum automatischen Einmitten asymmetrischer Profile, mittels des Sensors erfolgt.

8. Verzahnmaschine mit einer Maschinensteuerung zum Durchführen eines Verfahrens nach einem der Ansprüche 1 bis 7, **dadurch gekennzeichnet, dass** an der Verzahnmaschine ein Sensor (8) zum Abtasten einer Schleifschnecke (11) vorgesehen ist, wobei der Sensor (8) als ein optischer Sensor (8) ausgebildet ist.

## Claims

1. Method for automatically determining the geometrical dimensions of a tool with machining region in worm-thread form, in particular of a grinding worm, in a gear cutting machine, wherein at least one parameter of the tool is acquired and/or determined automatically by means of at least one sensor (8), wherein the sensor (8) is formed as an optical sensor (8), and wherein the position of the tool inside the machine, and geometrical main dimensions, such as tool length, tool diameter and/or the number of threads of the tool and/or the lead direction of the tool are determined, and wherein the pitch, the modulus, the diameter, the screw width, the screw pitch and/or the V-position of the tool, in particular of the grinding worm (11), is determined by means of calculatory processing of the acquired and/or determined values.

2. Method according to claim 1, **characterized in that** a calibration process is carried out to determine the location of the sensor (8) with respect to the tool, in particular to the grinding worm (11), and or with respect to the positioning within the gear cutting tool.

3. Method according to claim 1, **characterized in that** an alignment of the tool to a predefined reference point, preferably the alignment of the A axis to 0°, is carried out for determining the number of starts and subsequently the sensor detects a plurality of revolutions, in particular three revolutions, of the tool, in particular of the grinding worm, about the B axis.

4. Method in accordance with claim 1, **characterized in that** at least one respective measurement is carried out for determining the lead direction by means of the sensor above and below the center axis of the tool, in particular of the grinding worm (11); and/or **in that** the tool is rotated and the lead direction is determined by a mutual shift of the sensor (8) and/or of the tool in the V direction.

5. Method in accordance with one of the preceding claims, **characterized in that**, to mesh the tool, in particular the grinding worm (11), the tool is traveled along the longitudinal direction or V axis direction of V direction of said grinding worm, with the position of the teeth along the V axis direction being determined by means of the sensor (8).

6. Method in accordance with one of the preceding claims, wherein the sensor (8) is an analog and/or digital sensor (8).

7. Method according to any of the preceding claims, **characterized in that** a determination of different parameters for automatically centering asymmetrical profiles takes place by means of the sensor.

8. Gear cutting machine comprising a machine control for carrying out a method in accordance with one of the claims 1 to 7, **characterized in that** a sensor (8) for scanning a grinding worm (11) is provided at the gear cutting machine, wherein the sensor (8) is formed as an optical sensor (8).

## Revendications

1. Procédé de détermination automatique des dimensions géométriques d'un outil avec une zone d'usinage en forme de spire de vis sans fin, notamment d'une vis sans fin de meulage, dans une machine à tailler les engrenages, au moins un paramètre de l'outil étant détecté et/ou déterminé automatiquement au moyen d'au moins un capteur (8), le capteur (8) étant réalisé comme un capteur optique (8), et la position de l'outil à l'intérieur de la machine ainsi que des principales dimensions géométriques, telles que la longueur de l'outil, le diamètre de l'outil et/ou le nombre de spires de l'outil et/ou la direction du pas de l'outil, étant déterminées, et le pas, le module, le diamètre, la largeur de la vis sans fin, le pas des spires de la vis sans fin et/ou la position en V de l'outil, notamment de la vis sans fin de meulage (11), étant déterminés au moyen d'un traitement par calcul des valeurs détectées et/ou déterminées.

2. Procédé selon la revendication 1, **caractérisé en ce qu'**une opération de calibrage est mise en œuvre pour déterminer la position du capteur (8) par rapport à l'outil, notamment à la vis sans fin de meulage (11), et/ou pour le positionnement à l'intérieur de la machine à tailler les engrenages.

3. Procédé selon la revendication 1, **caractérisé en ce que**, pour déterminer le nombre de spires, une orientation de l'outil vers un point de référence prédéfini, de préférence l'orientation de l'axe A à 0°, est réalisée et ensuite le capteur détecte plusieurs rotations, notamment trois rotations, de l'outil, notamment de la vis sans fin de meulage, autour de l'axe B.

4. Procédé selon la revendication 1, **caractérisé en ce que**, pour déterminer la direction du pas, au moins une mesure est mise en œuvre au moyen du capteur au-dessus et au-dessous de l'axe central de l'outil, notamment de la vis sans fin de meulage (11), et/ou l'outil est tourné et la direction du pas est déterminée par coulissement mutuel du capteur (8) et/ou de l'outil dans la direction V.

5. Procédé selon l'une quelconque des revendications précédentes, **caractérisé en ce que**, pour centrer l'outil, notamment la vis sans fin de meulage (11), l'outil est déplacé le long de sa direction d'axe longitudinal ou V ou dans la direction V, la position des dents le long de la direction de l'axe V étant déterminée au moyen du capteur (8).

6. Procédé selon l'une quelconque des revendications précédentes, le capteur (8) étant un capteur analogique et/ou numérique (8).

7. Procédé selon l'une quelconque des revendications précédentes, **caractérisé en ce qu'**une détermination de différents paramètres pour le centrage automatique de profils asymétriques est effectuée au moyen du capteur.

8. Machine à tailler les engrenages avec une commande de machine pour mettre en œuvre un procédé selon l'une quelconque des revendications 1 à 7, **caractérisée en ce qu'**un capteur (8) est prévu sur la machine à tailler les engrenages pour palper une vis sans fin de meulage (11), le capteur (8) étant réalisé comme un capteur optique (8).
